# EUROPÄISCHE PATENTSCHRIFT

(11) **EP 0 648 623 B1**
(45) Veröffentlichungstag und Bekanntmachung des Hinweises auf die Patenterteilung: **06.05.1998**
(21) Anmeldenummer: 94116001.2
(22) Anmeldetag: 11.10.1994
(51) Int. Cl.: B60C 11/14, B60C 11/18

(54) **Luftreifen, insbesondere Kraftfahrzeugluftreifen**
Tyre, especially for motor vehicles
Bandage pneumatique, en particulier pour véhicules à moteur

(30) Priorität: 15.10.1993 DE 4335150
(43) Veröffentlichungstag der Anmeldung: 19.04.1995
(73) Patentinhaber: Continental Aktiengesellschaft, 30165 Hannover (DE)
(72) Erfinder: Teves, Reinhard, Dr., D-30926 Seelze (DE); Du Bois, Andre, Dr., D-30657 Hannover (DE); Dumke, Joachim, D-31275 Lehrte (DE)

(56) Entgegenhaltungen:
- DE-A- 2 052 298
- FR-A- 2 214 601
- US-A- 1 426 800
- US-A- 2 513 064
- US-A- 2 557 945
- US-A- 2 756 799
- US-A- 2 767 759
- US-A- 3 907 019

## Beschreibung

Die Erfindung betrifft einen Luftreifen, insbesondere einen Kraftfahrzeugluftreifen, der eine mit Armierungen und radial innenliegenden Wülsten versehenen Karkasse und einen auf die Karkasse aufgelegten profilierten Laufstreifen aufweist, wobei auf den Laufstreifen eine das Profil verstärkende Zusatzschicht aufgebracht ist.

Das Profil solcher Reifen soll nach Möglichkeit bei allen Witterungsbedingungen optimale Fahreigenschaften gewährleisten.

Es sind Laufstreifenmischungszusammensetzungen bekannt, die weich sind, sich dadurch der Straßenoberfläche anpassen können und somit eine bessere Bodenhaftung aufweisen als Laufstreifen aus einer harten Mischung. Beim Fahren werden aber die weichen Profilklötze und/oder -rillen verbogen und/oder gekippt, und es tritt somit eine Verminderung des Fahrbahnkontakts ein.

Der bisherige Stand der Technik konnte dieses Problem nicht ausreichend lösen.

Zum Stand der Technik gehören Zusatzschichten aus Gummi, die auf die Lauffläche des Reifenrohlings aufgebracht und mit diesem eingeformt werden. Solche Zusatzschichten bestehen aus Gummimischungen, die während des Vulkanisierens aufgrund ihres viskosen Fließverhaltens in den Hauptflußrichtungen die Profilflanken nur teilweise und in dünnen Schichten bedecken. So beschreibt DE-OS 1480981 eine Zusatzschicht aus harten und abriebfesten Mischungen, die die Oberkanten der Profilklötze verhärten soll, um einen auf der Straße vorhandenen Schmierfilm zu durchschneiden. Mit dieser Variante ist aber keine Verstärkung des gesamten Profilklotzes, aufgrund des oben genannten Fließverhaltens von Gummimischungen, erreichbar.

Aus der US-A-2 513 064 ist es bekannt, einen Laufstreifen mit einer Schicht oder mehreren Schichten zu versehen, die aus einem in Gummi oder ähnlichem eingebetteten geflochtenen Metallgewebe besteht. Auf diese Weise bleiben immer, ungeachtet der Abnutzung des Reifens, Metalldrähte an der Oberfläche zur Erhöhung der Griffigkeit.

Es ist weiterhin bekannt, Laufstreifenmischungen mit Kurzfasern aus verschiedenen Materialien wie Reyon, Polyester, Polyamid oder Aramid zu versteifen (DE-GM 1900114) einzusetzen. Nachteil solcher Mischungen ist eine sehr geringe Abriebbeständigkeit der Lauffläche.

Außerdem ist aus der Gattungsgemäßen US 2 756 799 ein Luftreifen bekannt, in dessen Laufstreifen Metalldrähte eingebettet sind. Teile dieser Metalldrähte können einen direkten Kontakt zur Fahrbahn haben und ermöglichen dadurch einen verbesserten Eisgriff.

Um diese Nachteile auszuräumen, liegt der Erfindung die Aufgabe zugrunde, Fahreigenschaften von Luftreifen, insbesondere die Bodenhaftung, durch Stabilisierung der Profilklötze und/oder -rillen wirksam zu verbessern. Gelöst wird die Aufgabe, durch den kennzeichnenden Teil des Patentanspruchs.

Durch eine solche Zusatzschicht ist es möglich die Profilflanken wirksam zu verstärken. Beim Einformen dieser Zusatzschicht auf den Reifenrohling wird der in ihr eingebettete Festigkeitsträger an die Profilflanken gedrückt. Damit befindet sich an der gesamten Fläche der Profilflanken eine Verstärkung, die ein Verbiegen der Profilklötze und/oder -rillen vermindert. Im Gegensatz zum Stand der Technik wird durch die erfindungsgemäße Lösung eine gleichmäßige Verstärkung zum Profilgrund hin erzielt. Im Unterschied zu bisherigen Lösungen des Standes der Technik (DE-OS 1480981) ist die Mischungszusammensetzung der Zusatzschicht von geringerer Bedeutung, da die Stabilisierung der Profilklötze über die in der Zusatzschicht eingebetteten Festigkeitsträger erzielt wird, die eine versteifende Wirkung auf die Profilflanken ausüben. Das Einbetten der Festigkeitsträger in Gummi oder Thermoplast ist vorteilhaft, weil die Festigkeitsträger definiert auf den Reifenrohling aufgebracht werden können und damit beim Einformen gleichzeitig eine feste Bindung zwischen Festigkeitsträger und Profilflanke des Laufflächenprofils hergestellt wird. Der Zugverformungsmodul der erfindungsgemäßen Zusatzschicht ist größer als der der darunterliegenden Lauffläche.

Dabei hat es sich als besonders günstig erwiesen, wenn die erfindungsgemäße profilflankenverstärkende Zusatzschicht die 0,05- bis 0,3-fache Dicke des Laufstreifens aufweist.

Dadurch wird eine ausreichende Verstärkung der Profilflanken ermöglicht und gleichzeitig der Aufwand beim Entfernen der Aufstandsfläche des Profils in Grenzen gehalten. Das Entfernen der Zusatzschicht ist vorteilhaft, da durch die eingebetteten Festigkeitsträger ein schlechterer Bodenkontakt bewirkt wird und außerdem der Abrieb erhöht wird. Dadurch ist es auch möglich, diese Schicht im Fahrbetrieb abzufahren.

Eine weitere vorteilhafte Ausgestaltung der erfindungsgemäßen Lösung besteht darin, daß das Material des Laufstreifens porös ist. Wenn nach der Fertigstellung des Reifens, d. h. nach dem Einformen, die Aufstandsfläche des Profils von der profilverstärkenden festigkeitsträgerenthaltenden Zusatzschicht entfernt wird, werden die positiven Eigenschaften bzgl. Bodenhaftung einer weichen Lauffläche mit denen eines stabilen Profilklotzes verbunden. Das Aufbringen der erfindungsgemäßen Zusatzschicht ist aber nicht an die Zusammensetzung der Laufstreifenmischung gebunden, d.h. es können sämtliche Laufstreifenmischungen mit der erfindungsgemäßen Zusatzschicht überzogen werden.

Um optimale Verstärkungseigenschaften zu erreichen, ist es besonders günstig, daß die Zusatzschicht Festigkeitsträger in Form von organischen und/oder anorganischen hitzebeständigen, verformbaren faser-, faden- oder drahtartigen Gebilden oder Abschnitten solcher Gebilde enthält. Als Festigkeitsträger können unterschiedliche Materialien verwendet werden, wie z.B. Aramid, Polyester, Reyon, Stahl oder Glas. Dabei ist auch die Verwendung von z.B. Borsten oder Haaren vorteilhaft. Die Festigkeitsträger müssen den Einformungsprozeß unbeschadet überstehen.

Gleichzeitig sollen sie sich an die Profilflanken legen. Die beschriebenen Materialien erfüllen diese Vorrausetzungen am besten.

Die Länge der Abschnitte der beschriebenen Gebilde der erfindungsmäßig eingesetzten Festigkeitsträger soll das 0,25- bis 5-fache der Profiltiefe betragen, damit eine optimale Versteifung der Profilflanken erzielt wird.

Die faser-, faden- und/oder drahtartigen Gebilde (nicht deren Abschnitte) liegen in der Zusatzschicht in vorteilhafter Weise gestaucht und/oder zickzackverlegt und/oder in Wirrlage vor.
Unter einem gestauchten Festigkeitsträger soll ein Festigkeitsträger verstanden werden, dessen Struktur durch Krafteinwirkung zusammengedrückt wird. Dabei ist es unerheblich, ob der Festigkeitsträger eine regelmäßige (gestauchte Zickzackanordnung) oder eine unregelmäßige Strukturierung erhält. Wichtig ist, daß der Festigkeitsträger während des Einformvorgangs in der Lage ist, sich zu entkräuseln und sich gleichzeitig an die Profilflanken anzuschmiegen.

Für die Srukturierung und/oder Stauchung der Festigkeitsträger, die bereits zwischen unvulkanisiertem Gummi- oder Thermoplastschichten eingebettet sind, wird ein Verfahren vorgeschlagen, bei dem der dublierte Festigkeitsträger (Zusatzschicht) zwischen zwei Zahnwalzen in eine Zickzackanordnung gebracht wird und/oder durch die Krafteinwirkung von Walzen, die mit unterschiedlichen Geschwindigkeiten rotieren, gefaltet und zusammengepreßt wird. Durch solch eine Strukturierung wird ein webstrukturierter Festigkeitsträger erreicht, der mit unvulkanisiertem Gummi oder Thermoplast dubliert ist und der sich ideal einformen läßt. Durch diese Vorrichtung ist es möglich, einen einzelnen Festigkeitsträger, Festigkeitsträgeranhäufungen oder Gewebe zu strukturieren.

Eine weitere Ausgestaltung der Erfindung beinhaltet die Einlagerung von Festigkeitsträgern in die Zusatzschicht in Zickzackanordnung. Um solch eine Strukturierung zu erhalten, wird an einem Kalanderspalt mittels einer beweglichen Führungseinrichtung (z.B. Keil) der Festigkeitsträger hin und her und/oder auf und ab bewegt. Gleichzeitig fixiert eine Thermoplastmasse oder unvulkanisierter Gummi die erzeugte Struktur der Festigkeitsträger, indem die Festigkeitsträger im Kalander dubliert werden. Das hat den Vorteil, daß die Strukturierung und Einbettung der Festigkeitsträger in die Zusatzschicht in einem einzigen Verfahrensschritt erfolgen kann.

Unter in einer Wirrlage befindlichen Festigkeitsträger sind regellos in allen Richtungen verlaufende Festigkeitsträger zu verstehen. Durch diese Strukturierung wird eine lockere Anordnung der Festigkeitsträger erzeugt. In solch einer Wirrlage werden die Festigkeitsträger zwischen Thermoplast- oder unvulkanisierten Gummischichten eingebettet.

Prinzipiell ist es natürlich auch möglich, Festigkeitsträger in die Zusatzschicht aus unvulkanisiertem Gummi oder Thermoplast einzubetten, indem diese eingemischt werden.

Eine weitere vorteilhafte Ausgestaltung der Erfindung ist, daß die Festigkeitsträger durch Umwickeln unvulkanisierter Gummikerne mit faser-, faden- oder drahtartigen Gebilden auf den Gummikern aufgebracht sind. Unter einem Gummikern können Gummikörper mit einer z.B. Stab- oder Schicht- oder Spiralform verstanden werden.
Die Festigkeitsträger können mit einer Gummischicht versehen sein. Es ist aber auch möglich ungummierte Festigkeitsträger um den Gummikern zu wickeln. Dieser mit den Festigkeitsträgern umwickelte Gummikern wird auf den Laufstreifen eines unvulkanisierten Reifenrohlings aufgebracht.

Die erfindungsgemäße Zusatzschicht kann im Ganzen auf den Laufstreifen aufgebracht werden. Es ist aber auch möglich, einzelne Stücke dieser Zusatzschicht flächenhaft auf dem Laufstreifen zu verteilen.

Zur näheren Erläuterung der Erfindung dienen die Figuren und die Ausführungsbeispiele:
- Figur 1: eine schematische Darstellung eines Schnittes in Perspektive durch einen unvulkanisierten Luftreifen, der mit einer Karkasse und einer auf den Laufstreifen aufgebrachten Zusatzschicht versehen ist,
- Figur 2: eine schematische Darstellung eines Schnittes durch einen vulkanisierten Luftreifen mit vor dem Einformen in die Heizpresse aufgebrachter profilverstärkender Zusatzschicht,
- Figur 2a: eine schematische Darstellung eines Schnittes durch die Profilklötze eines Laufflächenprofils bei einem vulkanisierten Luftreifen beim Fahren mit profilverstärkender Zusatzschicht,
- Figur 2b: eine schematische Darstellung eines Schnittes durch die Profilklötzer eines Laufflächenprofils bei einem vulkanisierten Luftreifen, beim Fahren, ohne profilverstärkende Zusatzschicht,
- Figur 3: eine schematische Darstellung eines Schnittes durch einen Luftreifen nach Fig. 2 mit entfernten Profilaufstandsflächen des Reifens von der aufgebrachten und eingeformten profilverstärkenden Zusatzschicht,
- Figur 4: eine schematische Darstellung der Herstellung der profilverstärkenden Zusatzschicht, die einen in Zickzackanordnung befindlichen Festigkeitsträger enthält,
- Figuren 5a bis 5c: schematische Darstellungen der Herstellung der profilverstärkenden Zusatzschicht, die mehrere in Zickzackanordnung befindliche Festigkeitsträger enthält,
- Figur 6: eine schematische Darstellung eines Schnittes durch eine profilverstärkende Zusatzschicht in Festigkeitsträgerhöhe - zwischen zwei Gummi- oder Thermoplastschichten eingebetteter Festigkeitsträger in Zickzackanordnung nach Herstellung nach Fig. 4,
- Figur 7: die schematische Darstellung eines Schnittes durch einen Profilklotz der Lauffläche eines Luftreifen mit aufgebrachter Zusatzschicht, die Festigkeitsträger enthält, die sich in Zickzackanordnung befinden nach Herstellung nach Fig. 4 oder 5,
- Figur 8: eine schematische Darstellung eines Schnittes in Perspektive durch einen unvulkanisierten Luftreifen, mit Karkasse und einer auf den Laufstreifen aufgebrachten textilen Festigkeitsträgerschicht, die in einer Zusatzschicht aus Gummi oder Thermoplast in Zickzackanordnung eingebettet sein kann,
- Figur 9: eine schematische Darstellung eines um eine Gummischicht gewickelteten Festigkeitsträger als weitere Möglichkeit der Herstellung einer profilverstärkenden Zusatzschicht
- Figuren 10a und 10b: eine schematische Darstellung eines um einen Gummistab gewickelten Festigkeitsträgers, der sich in seinem Fadenverlauf kreuzt, in gedehntem (Figur 10b) und ungedehntem (Figur 10a) Zustand als weitere Möglichkeit der Herstellung einer profilverstärkenden Zusatzschicht,
- Figuren 11a bis 11c: schematische Darstellungen in Wirrlage befindlicher Festigkeitsträger, in unterschiedlichen Ausdehnungsformen; dieser Festigkeitsträger kann in eine Zusatzschicht eingearbeitet werden,
- Figur 12: eine schematische Darstellung eines Schnittes einer auf den Laufstreifen aufgebrachten profilverstärkenden Zusatzschicht, wobei sich der oder die Festigkeitsträger vor dem Einformen in Wirrlage befanden, mit dem Einformen entwirrten und an die Profilflanken gedrückt werden,
- Figur 13: eine schematische Darstellung der Herstellung eines strukturierten und gestauchten Festigkeitsträgers in einer Zusatzschicht; der oder die Festigkeitsträger sind einer Zusatzschicht eingebettet werden,
- Figur 14: eine schematische Darstellung der nach Figur 13 hergestellten strukturierten und gestauchten Festigkeitsträger, die in einer Zusatzschicht eingebettet sind.

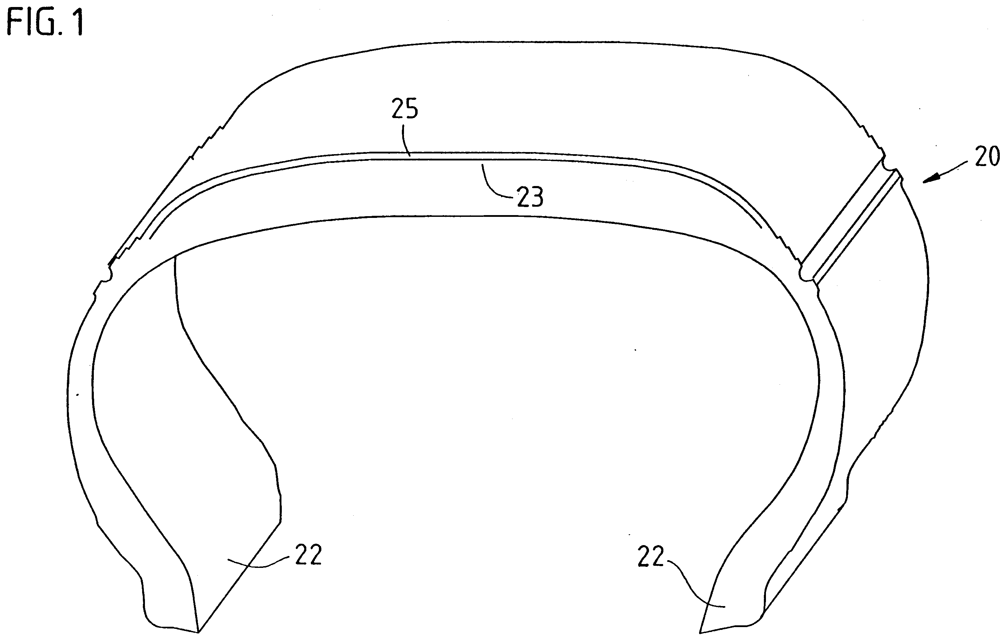

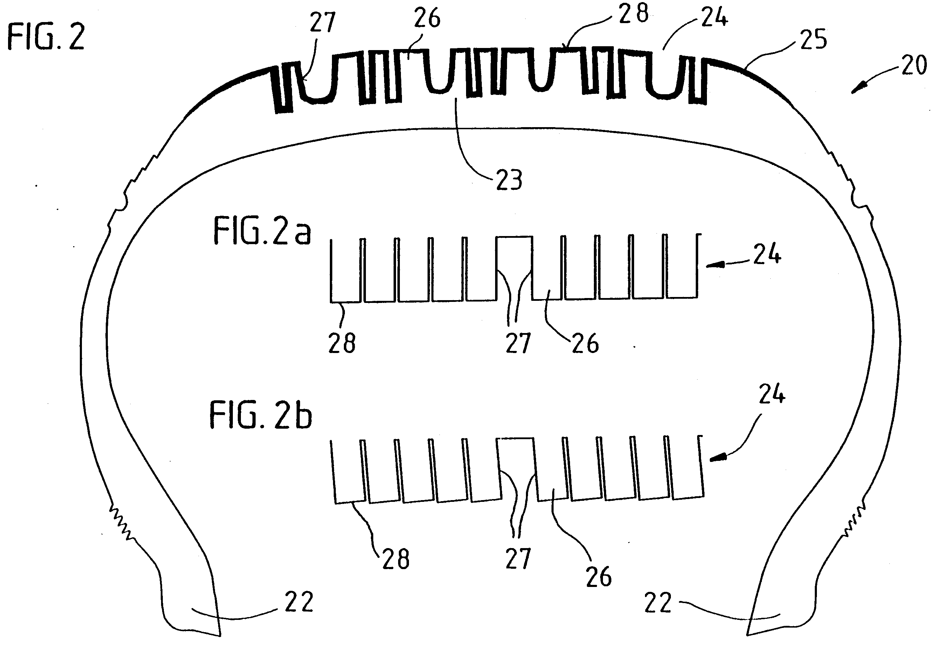

Ein in der Figur 1 schematisch dargestellter Kraftfahrzeugluftreifen 20 besteht im wesentlichen aus einer radial innen mit Wülsten 22 versehenen -nicht dargestellten-Karkasse auf die radial außen ein Laufstreifen 23 aufgelegt ist. Auf den Laufstreifen 23 ist eine Zusatzschicht 25 aufgetragen. Der Laufstreifen 23 enthält bei herkömmlichen Reifen ein aus Profilklötzen 26 bestehendes Profil 24, wie es die Figur 2a zeigt. Die Figur 2b illustriert den Zustand des Profils 24 im Fahrbetrieb, wobei es häufig zu Bewegungen und Verbiegungen bis zum Kippen der Profilklötze 26 kommt. Die Bodenhaftung kann dadurch verlorengehen.

Bei der Form- und Profilgebung des Kraftfahrzeugluftreifens 20 in einer - nicht dargestellten - Heizpresse wird die Zusatzschicht 25 um die Profilklötze 26 gelegt, so daß die Profilflanken 27 und die Profilaufstandsfläche 28 des Reifens des Profils 24 überdeckt wird. Diese durchgehende Bedeckung des Profils 24 durch die Zusatzschicht 25 bleibt auch nach dem Einformen erhalten, wie dies in der Figur 2 dargestellt ist.

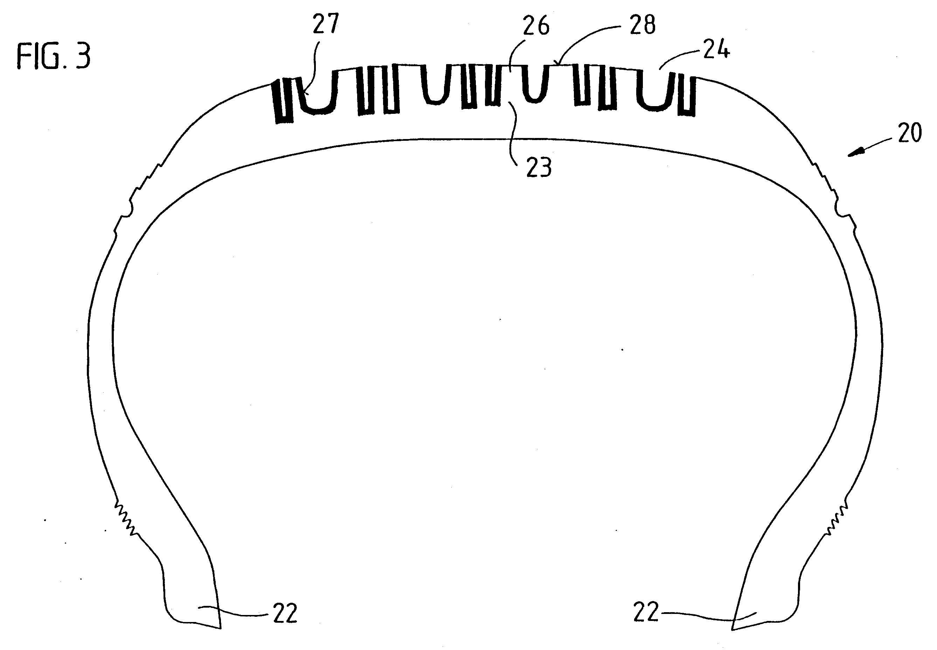

Um einen optimalen Bodenkontakt des Kraftfahrzeugluftreifens 20 zu ermöglichen, wird nach dem Einformen die Zusatzschicht 25 von der Profilaufstandsfläche 28 der Profilklötze 26 entfernt, wie das in der Figur 3 dargestellt ist. Der Kraftfahrzeugluftreifen 20 weist dadurch eine ausreichend gut haftende Profilaufstandsfläche 28 auf. Die Entfernung der Zusatzschicht 25 (nach Figur 2) kann durch Abschleifen oder durch Abfahren erreicht werden. Die Figur 3 zeigt einen Kraftfahrzeugluftreifen 20 nach dem Entfernen der Zusatzschicht 25, die in Figur 2 dargestellt ist, von der Profilaufstandsfläche 28. Zurück bleibt dadurch ein Profil 24, welches durch die Zusatzschicht 25 im Bereich seiner Profilflanken 27 also im wesentlichen senkrecht zur nicht dargestellten Fahrbahn verlaufend versteift ist. Die Profilklötze 26 selbst weisen von der abreibfähigen Zusatzschicht 25 befreite Profilaufstandsflächen 28 auf.

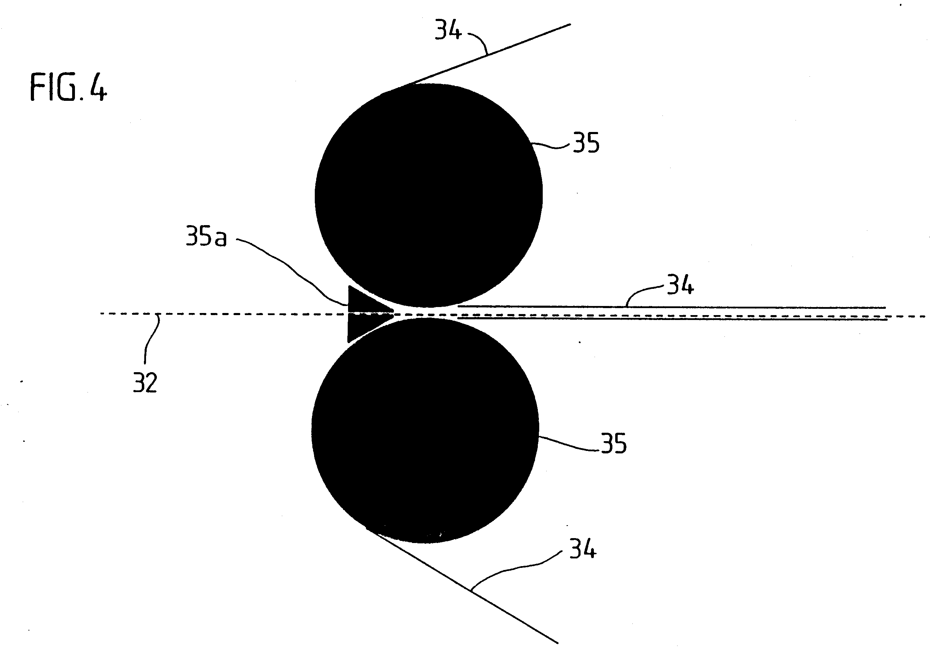

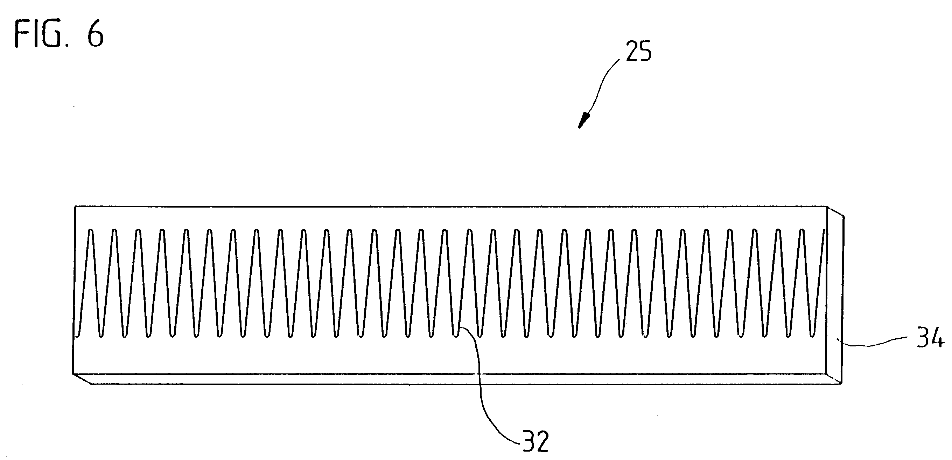

In der Figur 4 ist schematisch die Beschichtung eines Festigkeitsträgers 32 zwischen zwei Gummi- oder Thermoplastschichten 34 dargestellt. Dazu werden zwei einzelne Gummi- oder Thermoplastschichten 34 von Kalanderwalzen 35 gegeneinander gepreßt. Zwischen zwei Gummi- oder Thermoplastschichten 34 wird dabei ein Festigkeitsträger 32 mit eingearbeitet, der durch die sich hin und her bewegende Führungseinrichtung 35a (z.B. Keil) in Zickzackanordnung gebracht wird. Entsprechend der Vorrichtung in Fig. 4 wird ein Aufbau einer erfindungsgemäßen Zusatzschicht 25 erzeugt werden, der in Figur 6 dargestellt ist.

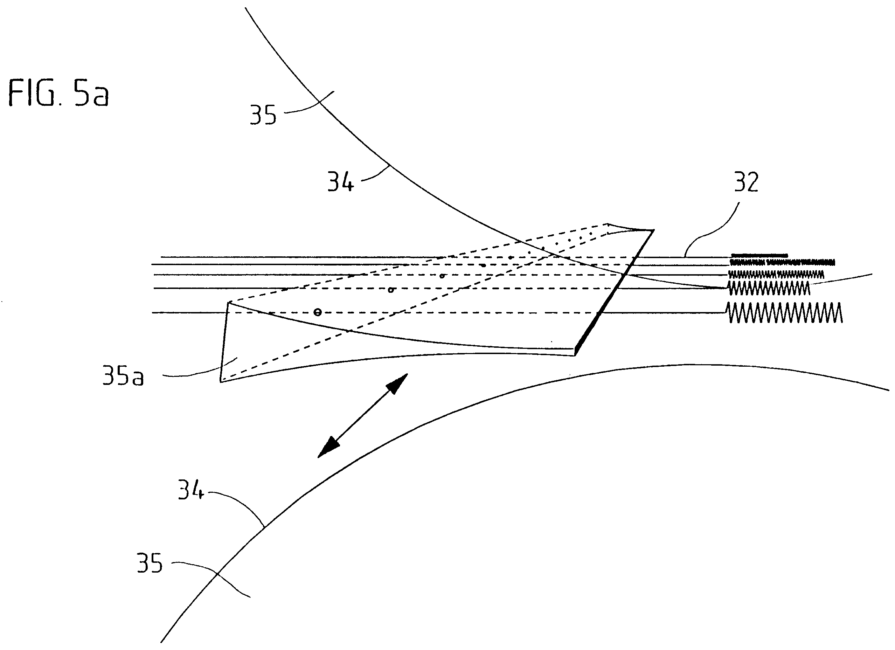

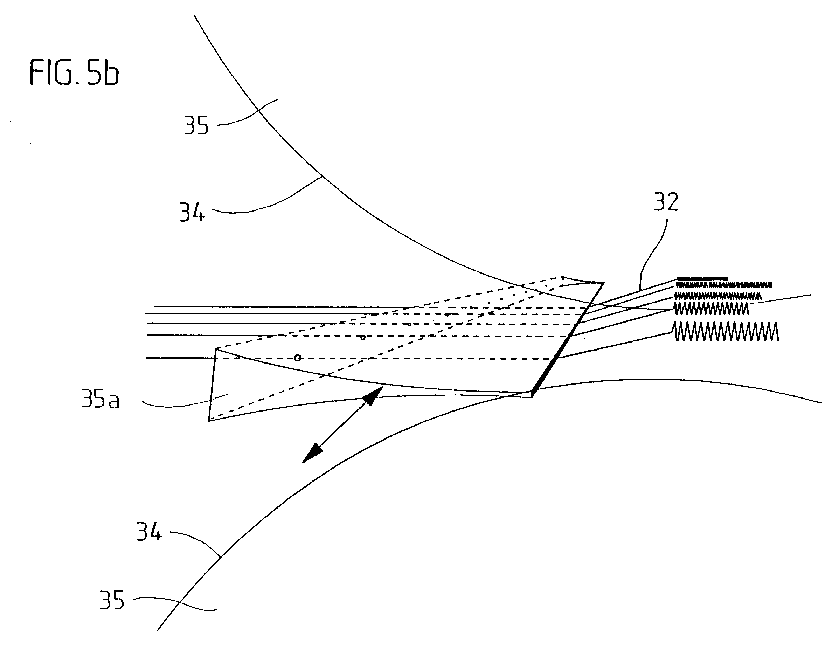

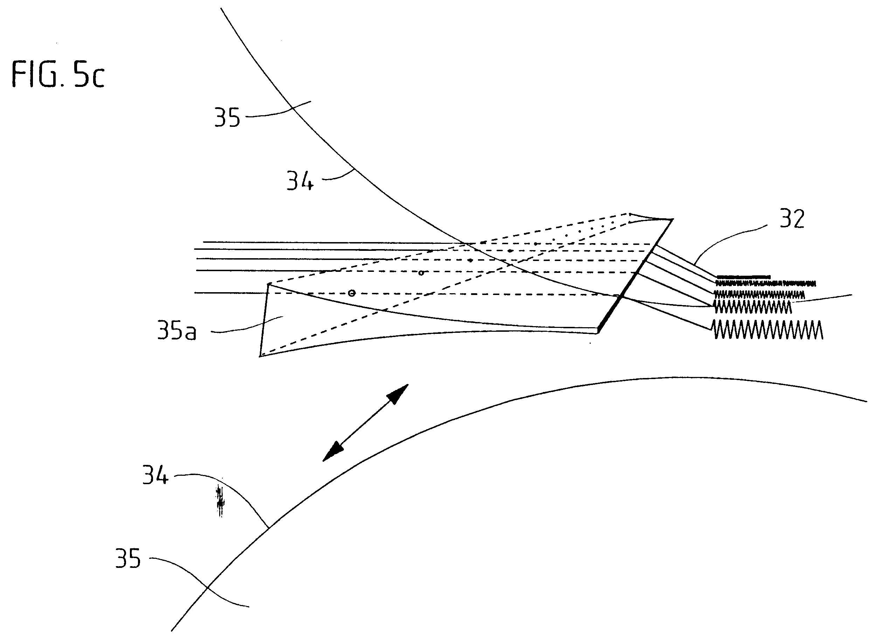

Eine Alternative zu Figur 4 stellt die in Figuren 5a bis 5c schematisch dargestellte Herstellung einer Zusatzschicht 25 mit zwischen zwei Gummi- oder Thermoplastschichten eingebrachten Festigkeitsträgern 32 dar. Im Unterschied zu Figur 4 können mehrere Festigkeitsträger 32 mittels der beweglichen Führungseinrichtung 35a gleichzeitig in zwei Gummi- oder Thermoplastschichten 34 eingebettet werden. Durch die Hin- und Herbewegungen der Führungseinrichtung 35a, die denen in der Figur 5 dargestellten entsprechen, wird hier wiederum eine Zickzackanordnung erzielt.

Die Führungseinrichtung 35a der Figuren 4 und 5 können sich auch in andere Raumrichtungen bewegen, was keine geordnete Zickzackanordnung des bzw. der Festigkeiträger zur Folge hat. Aber auch solch strukturierte Festigkeitsträger sind für den Einsatz in der erfindungsgemäßen Zusatzschicht geeignet.

Die Figur 6 zeigt den Schnitt eines in eine Gummi- oder Thermoplastschicht 34 eingebetteten Festigkeitsträgers 32 in Zickzackanordnung. Die Herstellung ist in der Figur 4 dargestellt. Solch eine Zusatzschicht wird auf den unvulkanisierten Reifen aufgelegt und mit diesem in einer Vulkanisationsform eingeformt.

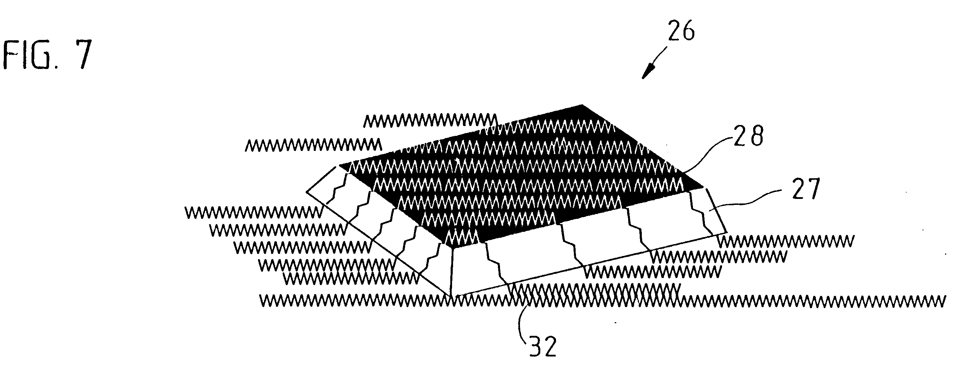

Der in Zickzackanordnung befindliche Festigkeitsträger 32 wird beim Einformen des Profils 24, wie in Figur 7 dargestellt, an den Profilflanken 27 des Profilklotzes 26 entkräuselt. Die Profilaufstandsfläche 28 des Reifens wird von dem Festigkeitsträger 32 überdeckt. Der bzw. die Festigkeitsträger 32 sind in einer Gummi- oder Thermoplastschicht 34, wie in Figur 6 deutlich wird, eingebettet.

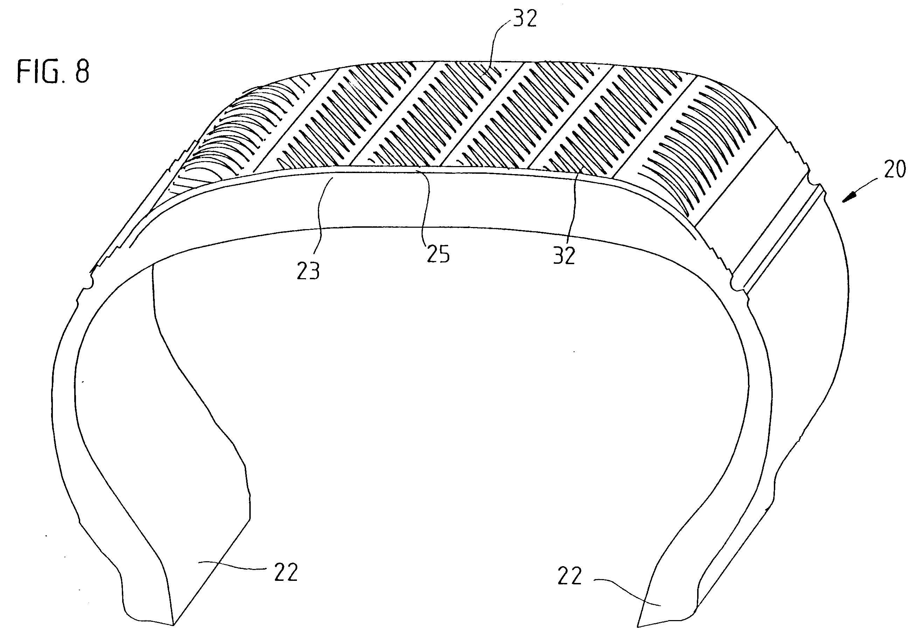

In der Figur 8 ist ein Luftreifen nach Figur 1 ersichtlich, bei dem die Zusatzschicht 25 aufgebracht ist. Die Zusatzschicht 25 enthält Festigkeitsträger 32, die wie in Figur 6 dargestellt, in der Zusatzschicht 25 eingebettet vorliegen. Dabei ist es unwichtig, in welcher Richtung die Festigkeitsträger 32 in der Zusatzschicht verlaufen.

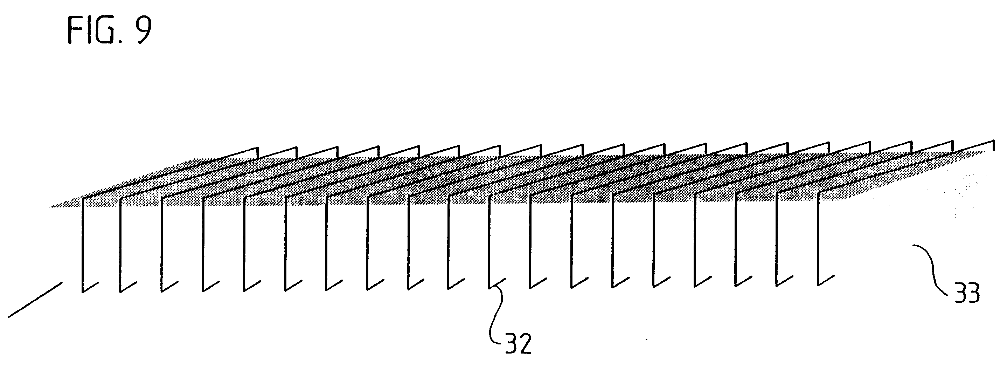

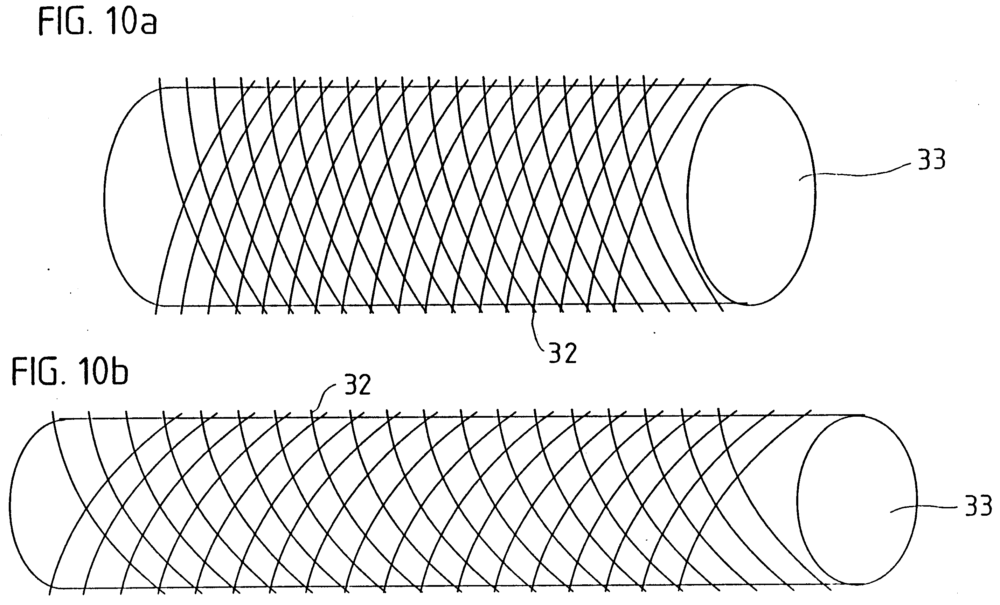

Die Figuren 9, 10a und 10b zeigen weitere Ausführungsformen einer mit einem oder mehreren Festigkeitsträgern 32 versehenen Zusatzschicht 25. Dabei sind der oder die Festigkeitsträger 32 um die Stäbe 33 gewickelt. Diese Stäbe können aus unvulkanisiertem Gummi oder aus Thermoplast sein. Die Festigkeitsträger 32 liegen in ihrem Fadenverlauf gekreuzt zueinander. Es sind aber auch andere Umwicklungsmöglichkeiten denkbar. Figur 10b verdeutlicht den gedehnten Zustand des Gummistabes mit umwickelten Festigkeitsträger/n der Figur 10a, der sich ergibt, wenn der umwickelte unvulkanisierte Gummistab auf den Laufstreifen eines Luftreifen aufgebracht wird und während des Einformens in der Vulkanisationsform in die Profilflanken zu liegen kommt.

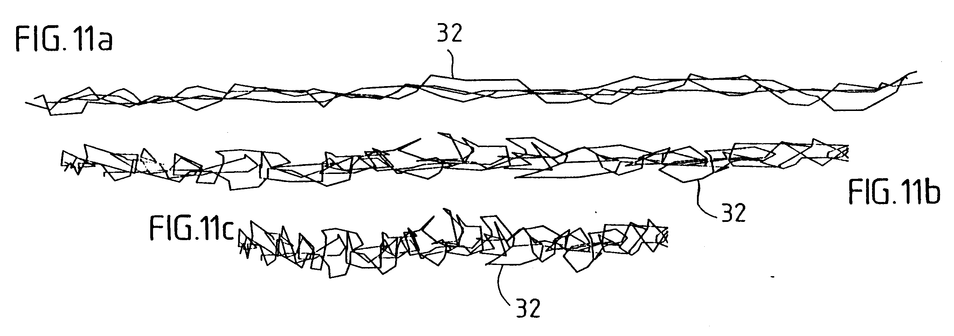

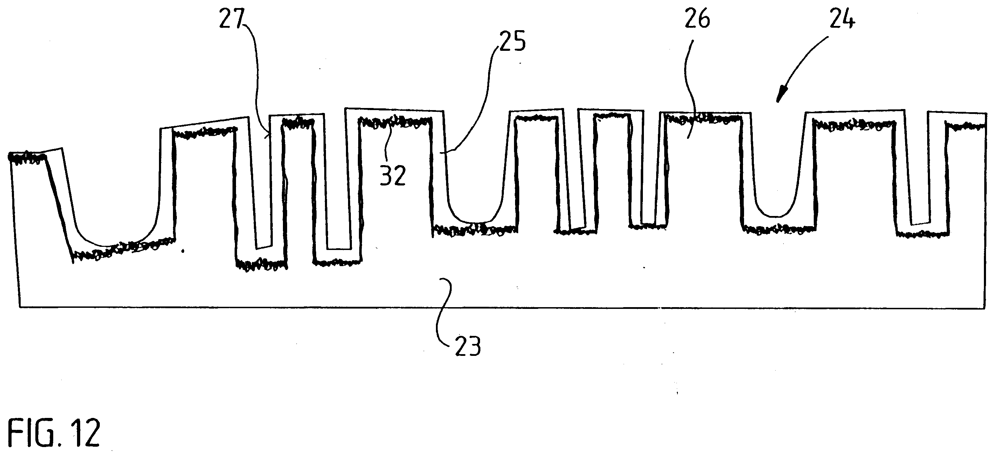

Eine weitere Möglichkeit der Strukturgebung der Festigkeitsträger 32 besteht darin, diese in Wirrlage nach Figuren 11a, 11b und 11c anzuordnen. Für den zu erzielenden verstärkenden Effekt der Profilflanken 27, in der Figur 12 ersichtlich, ist eine Variation in der Strukturierung der Figuren 11a bis 11c vorteilhaft.

Diese wirre Struktur der Festigkeitsträger 32 nach den Figur 11a bis 11c ermöglicht das Einformen der Zusatzschicht 25 mit dem Profil 24 nach Figur 12. Dabei wird der in Wirrlage befindliche Festigkeitsträger 32 an den Profilflanken 27 in den entwirrten Zustand versetzt. Damit wird eine Versteifung der Profilflanken 27 des Profilklotzes 26 erzielt.

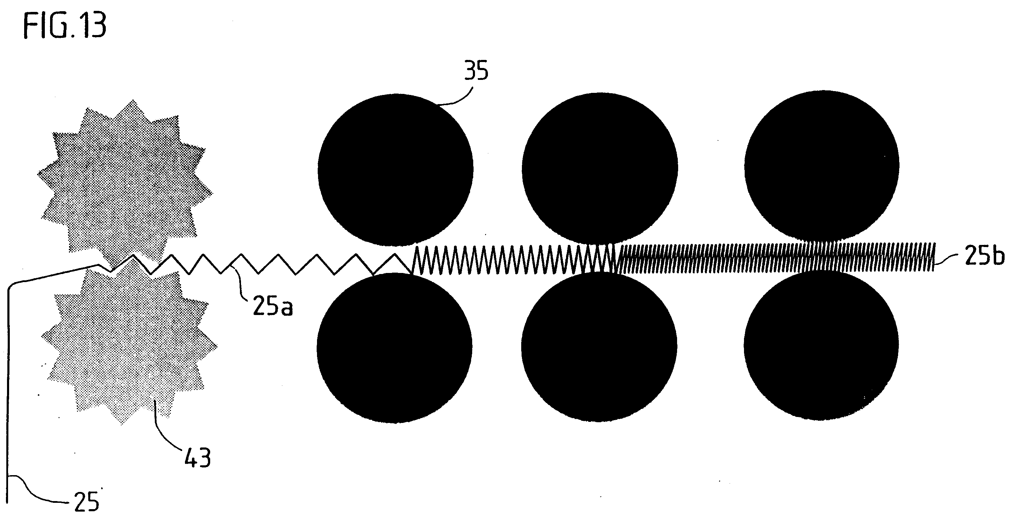

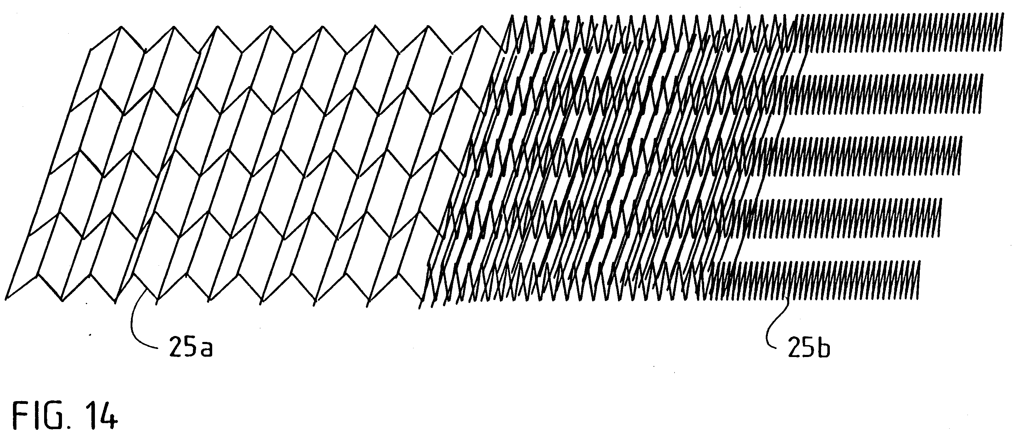

Nach der Vorrichtung nach Figur 13 läßt sich eine Zusatzschicht 25 erzielen, die in Figur 14 dargestellt ist. Dabei wird eine Zusatzschicht 25, die Festigkeiträger enthält, mittels einer Strukturwalze 43 in eine gefaltete Struktur 25a versetzt und anschließend durch aufeinanderfolgende Walzen 35, die mit unterschiedlichen Geschwindigkeiten rotieren, in einen gestauchten Zustand 25b versetzt. Das Ergebnis eines mit der Vorrichtung nach Figur 13 behandelten Cordgewebes verdeutlicht Figur 14.

Die Bezugszeichenliste ist Bestandteil der Beschreibung.

### Bezugszeichen

- 20: Luftreifen
- 22: Wulst
- 23: Laufstreifen
- 24: Profil
- 25: Zusatzschicht
- 25a: gefaltete Zusatzschicht
- 25b: gefaltete und gestauchte Zusatzschicht
- 26: Profilklotz
- 27: Profilflanke
- 28: Profilaufstandsfläche des Reifens
- 32: Festigkeitsträger
- 33: Stab aus unvulkanisiertem Gummi oder Thermoplast
- 34: Schicht aus Gummi oder Thermoplast
- 35: Walze
- 35a: bewegliche Führungseinrichtung
- 43: Strukturwalze

## Patentansprüche

1. Luftreifen, insbesondere Kraftfahrzeugluftreifen, der eine mit Armierungen und radial innenliegenden Wülsten versehene Karkasse und einen auf die Karkasse aufgelegten profilierten Laufstreifen aufweist, wobei auf den Laufstreifen eine das Profil verstärkende Zusatzschicht aufgebracht ist, **dadurch gekennzeichnet**, daß die Zusatzschicht aus Gummi oder Thermoplast gebildet ist, einen höheren Zugverformungsmodul als der darunterliegende Laufstreifen aufweist und ungedehnte Festigkeitsträger enthält und daß sich die Zusatzschicht zumindest an den Flanken der Profilklötze befindet.

2. Luftreifen nach Anspruch 1, dadurch gekennzeichnet, daß die profilverstärkende Zusatzschicht die 0,05 bis 0,3-fache Dicke des Laufstreifens aufweist.

3. Luftreifen nach Anspruch 1, dadurch gekennzeichnet, daß das Material des Laufstreifens porös ist.

4. Luftreifen nach Anspruch 1, dadurch gekennzeichnet, daß die Zusatzschicht Festigkeitsträger in Form von organischen und/oder anorganischen hitzebeständigen, verformbaren faser-, faden- oder drahtartigen Gebilden oder Abschnitten solcher Gebilde enthält.

5. Luftreifen nach Anspruch 1 oder 4, dadurch gekennzeichnet, daß die Länge der Festigkeitsträger das 0,25- bis 5-fache der Profiltiefe beträgt.

6. Luftreifen nach Anspruch 1 oder 4, dadurch gekennzeichnet, daß die Festigkeitsträger in der unvulkanisierten Zusatzschicht gestaucht und/oder zickzackverlegt und/oder in Wirrlage vorliegen.

7. Luftreifen nach Anspruch 1 oder 4, dadurch gekennzeichnet, daß die Festigkeitsträger durch Umwickeln eines unvulkanisierten Gummikernes mit faser-, faden- oder drahtartigen Gebilden auf den Gummikern aufgebracht sind.

8. Luftreifen nach einem der Ansprüche 1 bis 7, dadurch gekennzeichnet, daß die Zusatzschicht anorganische Partikeln wie Korund- und/oder Siliciumdioxid- und/oder Glaspartikeln enthält.

9. Luftreifen nach einem der Ansprüche 1 bis 8, dadurch gekennzeichnet, daß die Zusatzschicht an den Aufstandsflächen des Profils entfernt ist.

10. Verfahren zur Herstellung einer profilverstärkenden Zusatzschicht für Luftreifen nach einem oder mehreren der Ansprüche 1 bis 9, dadurch gekennzeichnet, daß Festigkeitsträger zwischen Thermoplastschichten oder unvulkanisierten Gummischichten eingebracht werden.

11. Verfahren nach Anspruch 10, dadurch gekennzeichnet, daß die Festigkeitsträger in Zickzackanordnung zwischen Thermoplastschichten oder unvulkanisierten Gummischichten eingebracht werden.

12. Verfahren nach Anspruch 11 dadurch gekennzeichnet, daß an einem Kalander mittels einer hin und her und/oder auf und ab bewegten Führungseinrichtung Festigkeitsträger so zwischen zwei in einem Walzenspalt einlaufende unvulkanisierte Gummischichten eingebettet werden, daß eine Zickzackanordnung erzeugt wird.

13. Verfahren nach Anspruch 10, dadurch gekennzeichnet, daß die Zusatzschicht zwischen zwei Zahnwalzen in Zickzackanordnung gebracht wird und/oder durch die Krafteinwirkung von Walzen, die mit unterschiedlichen Geschwindigkeiten rotieren, gefaltet und zusammengepreßt wird.

14. Verfahren nach Anspruch 10, dadurch gekennzeichnet, daß die Festigkeitsträger in Wirrlage zwischen Thermoplastschichten oder unvulkanisierten Gummischichten eingebracht werden.

15. Verfahren nach Anspruch 10, dadurch gekennzeichnet, daß die Festigkeitsträger in die Zusatzschicht eingemischt werden.

16. Verfahren zur Herstellung einer profilverstärkenden Zusatzschicht für einen Luftreifen nach einem der Ansprüche 1 bis 9, dadurch gekennzeichnet, daß Festigkeitsträger um einen unvulkanisierten Gummikern gewickelt werden und dieser Verbund auf den Laufstreifen eines unvulkanisierten Reifenrohlings aufgebracht wird.

## Claims

1. Pneumatic tyre, more especially a pneumatic automotive vehicle tyre, which has a carcase, which is provided with reinforcements and radially internal beads, and a profiled tread strip which is placed upon the carcase, an additional layer being applied to the tread strip and reinforcing the profile, characterised in that the additional layer is formed from rubber or thermoplastic material, it has a higher modulus of tensile deformation than the tread strip situated therebeneath, and it contains unexpanded reinforcing members, and in that the additional layer is situated on at least the side walls of the profile blocks.

2. Pneumatic tyre according to claim 1, characterised in that the profile-reinforcing additional layer has between 0.05- and 0.3-times the thickness of the tread strip.

3. Pneumatic tyre according to claim 1, characterised in that the material of the tread strip is porous.

4. Pneumatic tyre according to claim 1, characterised in that the additional layer contains reinforcing members in the form of organic and/or inorganic, heat-resistant, deformable, fibre-like, filament-like or wire-like structures or portions of such structures.

5. Pneumatic tyre according to claim 1 or 4, characterised in that the length of the reinforcing members is between 0.25- and 5-times the profile depth.

6. Pneumatic tyre according to claim 1 or 4, characterised in that the reinforcing members are compressed in the unvulcanised additional layer and/or are placed in a zigzag manner and/or are in a random orientation.

7. Pneumatic tyre according to claim 1 or 4, characterised in that the reinforcing members are applied to the rubber core by winding fibre-like, filament-like or wire-like structures round an unvulcanised rubber core.

8. Pneumatic tyre according to one of claims 1 to 7, characterised in that the additional layer contains inorganic particles such as corundum particles and/or silicon dioxide particles and/or glass particles.

9. Pneumatic tyre according to one of claims 1 to 8, characterised in that the additional layer on the contact surfaces of the profile is removed.

10. Method of producing a profile-reinforcing additional layer for pneumatic tyres according to one or more of claims 1 to 9, characterised in that reinforcing members are introduced between thermoplastic layers or unvulcanised rubber layers.

11. Method according to claim 10, characterised in that the reinforcing members are introduced in a zigzag disposition between thermoplastic layers or unvulcanised rubber layers.

12. Method according to claim 11, characterised in that reinforcing members are embedded between two unvulcanised rubber layers, which enter a roller nip, by means of a guide arrangement, which is moved to and fro and/or up and down, on a calender so that a zigzag disposition is produced.

13. Method according to claim 10, characterised in that the additional layer between two toothed rollers is brought into a zigzag disposition and/or folded and compressed by the action of force of rollers which rotate at different speeds.

14. Method according to claim 10, characterised in that the reinforcing members are introduced in random orientation between thermoplastic layers or unvulcanised rubber layers.

15. Method according to claim 10, characterised in that the reinforcing members are mixed into the additional layer.

16. Method of producing a profile-reinforcing additional layer for a pneumatic tyre according to one of claims 1 to 9, characterised in that reinforcing members are wound round an unvulcanised rubber core, and this composite structure is applied to the tread strip of an unvulcanised tyre blank.

## Revendications

1. Bandage pneumatique en particulier un bandage pneumatique pour véhicules à moteurs, qui présente une carcasse munie d'armatures et de talons situés radialement à l'intérieur ainsi qu'une bande de roulement profilée posée sur la carcasse, une couche supplémentaire, qui renforce le profil, étant appliquée sur la bande de roulement, caractérisé par le fait que la couche supplémentaire est formée de caoutchouc ou de thermoplastique, présente un module de déformation en traction supérieur à celui de la bande de roulement située par-dessous et contient des supports de résistance non étirés et que la couche supplémentaire se trouve au moins contre les flancs des reliefs du profil.

2. Bandage pneumatique selon la revendication 1, caractérisé par le fait que la couche supplémentaire de renforcement du profil présente une épaisseur égale à 0.05 à 0,3 fois l'épaisseur de la bande de roulement.

3. Bandage pneumatique selon la revendication 1, caractérisé par le fait que le matériau de la bande de roulement est poreux.

4. Bandage pneumatique selon la revendication 1, caractérisé par le fait que la couche supplémentaire contient des support de résistance sous forme d'objets organiques et/ou inorganiques, résistant à la chaleur, déformables, du type fibres, fils mous, ou fils raides ou bien de morceaux de tels objets.

5. Bandage pneumatique selon la revendication 1 ou 4, caractérisé par le fait que la longueur des supports de résistance vaut 0,25 à 5 fois la profondeur du profil.

6. Bandage pneumatique selon la revendication 1 ou 4, caractérisé par le fait que dans la couche supplémentaire non vulcanisée, les supports de résistance se présentent en rétraction et/ou posés en zigzag et/ou en position emmêlée.

7. Bandage pneumatique selon la revendication 1 ou 4, caractérisé par le fait que l'on applique les supports de résistance sur un noyau de caoutchouc en bobinant des objets du type fibres, fils mous ou fils raides autour du noyau de caoutchouc non vulcanisé.

8. Bandage pneumatique selon l'une des revendications 1 à 7, caractérisé par le fait que la couche supplémentaire contient des particules inorganiques comme des particules de corindon et/ou de dioxyde de silicium et/ou de verre.

9. Bandage pneumatique selon l'une des revendications 1 à 8, caractérisé par le fait que la couche supplémentaire est éliminée sur les surfaces d'appui du profil.

10. Procédé de fabrication d'une couche supplémentaire de renforcement du profil pour bandages pneumatiques selon l'une ou plusieurs des revendications 1 à 9, caractérisé par le fait que l'on insère des supports de résistance entre des couches thermoplastiques ou des couches de caoutchouc non vulcanisée.

11. Procédé selon la revendication 10, caractérisé par le fait que l'on insère les supports de résistance selon une disposition en zigzag entre des couches thermoplastiques ou des couches de caoutchouc non vulcanisée.

12. Procédé selon la revendication 11, caractérisé par le fait que sur une calandre, au moyen d'un dispositif de guidage à mouvement de va-et-vient et/ou de bas en haut, on enrobe des supports de résistance entre deux couches de caoutchouc non vulcanisé introduites dans une fente entre cylindres de façon à produire une disposition en zigzag.

13. Procédé selon la revendication 10, caractérisé par le fait que la couche supplémentaire est amenée entre deux cylindres dentés selon une disposition en zigzag et/ou que, sous l'action de la force des cylindres, tournant à vitesses différentes, elle est pliée et comprimée.

14. Procédé selon la revendication 10, caractérisé par le fait que l'on applique les supports de résistance en position emmêlée entre des couches thermoplastiques ou des couches de caoutchouc non vulcanisé.

15. Procédé selon la revendication 10, caractérisé par le l'ait que l'on mélange les supports de résistance pour les insérer dans la couche supplémentaire.

16. Procédé de fabrication d'une couche supplémentaire de renforcement dit profil pour un bandage pneumatique selon l'une des revendications 1 à 9, caractérisé par le fait que l'on bobine des supports de résistance autour d'un noyau de caoutchouc non vulcanisé et que l'on applique ce composite sur la bande de roulement d'une ébauche de bandage pneumatique non vulcanisée.
